# DEMANDE DE BREVET EUROPEEN

(11) **EP 3 091 767 A1**
(43) Date de publication de la demande: **09.11.2016**
(21) Numéro de dépôt: 15305698.1
(22) Date de dépôt: 07.05.2015
(51) Int. Cl.: H04W 12/06, H04L 29/06, G06F 21/32

(54) **MAINTIEN D'UN ACCES SECURISE A UN SERVICE EN FONCTION D'UNE EMPREINTE BIOMETRIQUE ACQUISE A LA SUITE DE LA DETECTION D'UN EVENEMENT**

(71) Demandeur: Atos SE, 95870 Bezons (FR)
(72) Inventeur: Tachnoff, Serge, 75012 PARIS (FR)
(74) Mandataire: Novagraaf Technologies

(57) **Abrégé**

L'invention concerne un équipement numérique (T) comportant une interface homme-machine (V, C) permettant l'identification d'un utilisateur dudit équipement afin d'accorder l'accès à au moins un service fourni par ledit équipement, et l'acquisition d'une première empreinte biométrique associée audit utilisateur ; et des moyens pour détecter un événement lié audit utilisateur et déclencher alors l'acquisition par ladite interface homme-machine d'une seconde empreinte biométrique et la détermination du maintien ou non dudit accès en fonction d'une comparaison de ladite empreinte biométrique avec une première empreinte biométrique acquise préalablement à la détection dudit événement.

## Description

### DOMAINE DE L'INVENTION

L'invention concerne l'accès sécurisé aux services fournis par des équipements numériques, tels que par exemple des terminaux de communication. L'invention concerne plus particulièrement l'amélioration de la sécurisation de l'accès au service sur la durée.

### CONTEXTE DE L'INVENTION

Les équipements numériques propose généralement des mécanismes d'accès sécurisés à tous ou certains des services qu'ils fournissent à leurs utilisateurs.

Ces services peuvent être des applications logicielles fonctionnant sur les équipements numériques eux-mêmes, ou des fonctionnalités offertes par le système d'exploitation de l'équipement.

L'accès peut donc concerner une partie des fonctionnalités d'un équipement, mais aussi l'ensemble de ces fonctionnalités. Par exemple, avant de pouvoir utiliser un équipement numérique, l'utilisateur peut avoir à saisir un identifiant et/ou un mot de passe. C'est en général le cas d'un employé qui veut utiliser un ordinateur mis à disposition sur son lieu de travail.

L'accès peut également concerner un service fourni à distance à travers un réseau de communication. L'équipement numérique est alors un terminal de communication offrant une interface vers ce service distant. Même si l'utilisateur a accès au terminal lui-même, un contrôle d'accès particulier peut être mis en place concernant le service distant.

En général, une identification simple est requise pour l'utilisateur, consistant en la saisie d'un identifiant et/ou d'un mot de passe. Ainsi, sur un ordinateur de bureau, l'utilisateur est généralement invité à saisir un couple identifiant/mot de passe ; mais l'accès à un terminal de communication est typiquement accordé par la saisie seule d'un mot de passe, par exemple sous la forme d'un code PIN (pour « Personnal Identification Number » en anglais).

Des propositions ont été faites afin d'améliorer la sécurisation de l'accès, notamment vis-à-vis de la fraude informatique et de la négligence potentielle des utilisateurs.

Par exemple, des mécanismes d'authentifications à plusieurs niveaux peuvent être proposés en fonction du degré de sensibilité du service à accéder.

Par exemple, dans le cadre du commerce en ligne, une authentification forte a été recommandée par l'ANSSI (Agence Nationale de la Sécurité des Systèmes Informatiques) c'est-à-dire reposant sur au moins deux facteurs d'authentification parmi les suivants :
- Le facteur mémoriel, AF1 (« Ce que l'on sait ») : par exemple, un mot de passe, une date de naissance, etc.
- Le facteur matériel, AF2 (« ce qu'on possède ») : par exemple une carte à puce, un certificat numérique, une clé USB...
- Le facteur biométrique physiologique AF3, (« ce qu'il est ») : par exemples une empreinte digitale, les caractéristiques d'une pupille, une signature vocale...
- Le facteur comportemental AF4 (« ce qu'il fait ») : par exemple, une signature manuscrite...

En fonction du type de service accédé, d'autres types d'authentification peuvent être mis en place, et la littérature technique est prolixe sur les différents mécanismes d'authentification qui peuvent être implantés afin d'augmenter la sécurisation de l'accès, et/ou la facilité de mise en oeuvre et/ou l'ergonomie pour l'utilisateur.

Toutefois, ces aspects ne représentent qu'une partie du problème car ils ne sont relatifs qu'à l'accès initial au service. Or, le problème du maintient de cet accès dans la durée n'est que très rarement abordé.

### RESUME DE L'INVENTION

Le but de la présente invention est de fournir un mécanisme palliant au moins partiellement cette insuffisance de l'état de la technique à garantir une sécurisation de l'accès sur la durée. Plus particulièrement, l'invention vise à fournir un mécanisme pour vérifier qu'à un moment donné, l'utilisateur est bien celui qui s'était initialement authentifié.

A cette fin, la présente invention propose un procédé d'accès sécurisé pour un équipement numérique, comportant :
- une première phase comportant l'identification d'un utilisateur dudit équipement numérique, afin d'accorder l'accès à au moins un service fourni par ledit équipement numérique, et l'acquisition d'une première empreinte biométrique associée audit utilisateur ; et,
- une deuxième phase déclenchée lors de la détection d'un événement lié audit utilisateur par ledit équipement numérique et comprenant l'acquisition d'une empreinte biométrique et la détermination du maintien ou non dudit accès en fonction d'une comparaison de ladite seconde empreinte biométrique avec une première empreinte biométrique acquise préalablement à ladite détection d'un événement.

Suivant des modes de réalisation préférés, l'invention comprend une ou plusieurs des caractéristiques suivantes qui peuvent être utilisées séparément ou en combinaison partielle entre elles ou en combinaison totale entre elles :
- lesdites empreintes biométriques sont des photographies, capturées par une caméra fonctionnellement connectée audit équipement numérique ;
- ledit événement est représentatif d'une anomalie de comportement individuel dudit utilisateur ;
- la première phase comprend l'authentification dudit utilisateur sur la base de ladite première empreinte ;
- ledit équipement numérique est un terminal de communication connecté à un réseau de communication et ledit accès est un accès à un service disponible à travers ledit réseau de communication.

Un autre aspect de l'invention concerne un programme d'ordinateur comportant du code exécutable par un équipement numérique pour mettre en oeuvre le procédé tel que précédemment défini.

Un autre aspect de l'invention concerne un équipement numérique comportant une interface homme-machine permettant l'identification d'un utilisateur dudit équipement afin d'accorder l'accès à au moins un service fourni par ledit équipement, et l'acquisition d'une première empreinte biométrique associée audit utilisateur ; et des moyens pour détecter un événement lié audit utilisateur et déclencher alors l'acquisition par ladite interface homme-machine d'une seconde empreinte biométrique et la détermination du maintien ou non dudit accès en fonction d'une comparaison de ladite empreinte biométrique avec une première empreinte biométrique acquise préalablement à la détection dudit événement.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite interface homme-machine comporte une caméra pour capturer une première et une seconde photographies, constituant lesdites empreintes biométriques ;
- l'équipement comporte un détecteur de mouvements prévus pour déterminer ledit événement ;
- l'équipement numérique comporte une application prévue pour détecter l'inactivité de ladite interface homme-machine pendant une période prédéterminée.

Ainsi, grâce à l'invention, le maintien de l'accès peut être déterminé lorsqu'un événement lié à l'utilisateur est détecté. Cela peut être un long moment de non activité de l'utilisateur, laissant la possibilité à une personne tierce de prendre la place vacante de l'utilisateur devant le dispositif numérique ; cela peut être des mouvements brusques de l'équipement numérique, laissant supposer un vol à l'arraché du dispositif numérique, etc.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'équipement numérique selon un mode de réalisation de l'invention.
La figure 2 représente schématiquement un exemple d'organigramme décrivant un mode de réalisation du procédé selon l'invention.

### DESCRIPTION DETAILLEE DE L'INVENTION

L'invention est susceptible de s'appliquer à tous types de dispositif numérique.

Il peut s'agir de terminaux de communication tels que des téléphones mobiles, des « smartphones », des tablettes numériques, des ordinateurs fixes ou portables, etc. permettant d'accéder à des services à la fois localement et à distance à travers un réseau de communication mobile (3G, Wifi, LTE, Bluetooth...).

Tout autre type d'équipements numériques peut toutefois entrer également dans le cadre de l'invention : machines-outils, tableaux de bord d'un véhicule automobile, caisses d'un restaurant ou d'un supermarché, etc.

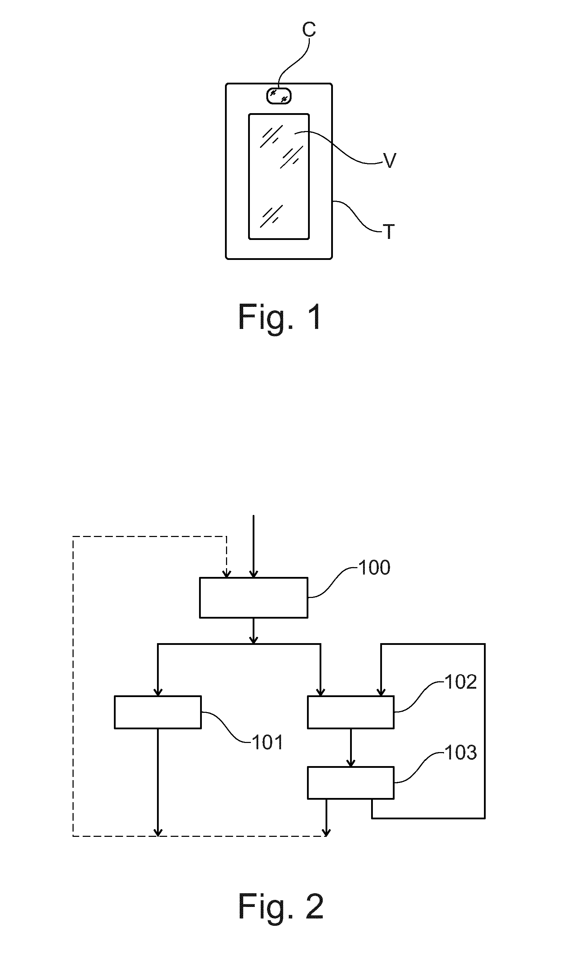

La figure 1 ne représente à ce titre qu'un exemple illustratif des nombreuses mises en oeuvre possibles de l'invention.

L'équipement numérique T dispose principalement d'une interface homme-machine qui lui permet de présenter de l'information à l'utilisateur et d'acquérir des informations de la part de cet utilisateur. Selon le type d'équipement numérique, l'interface homme-machine peut notamment comprendre un clavier, une souris ou autre dispositif de pointage, un écran V qui peut être un écran tactile, etc.

L'interface homme-machine peut également comprendre des moyens C d'acquisition d'une empreinte biométrique.

La biométrie est la mesure d'éléments biologiques, comportementaux ou physiologiques uniques et propres à chaque individu. Ainsi, par l'acquisition d'éléments biométriques, il est possible d'authentifier un utilisateur.

Selon l'invention, une empreinte biométrique peut être formée d'un ensemble de valeurs d'éléments biométriques. Typiquement, cet ensemble est un singleton, mais il est possible de rendre le mécanisme plus robuste en utilisant plusieurs éléments.

Ces éléments peuvent par exemple être des éléments physiologiques : une empreinte digitale, les caractéristiques d'une pupille, une signature vocale, une photographie du visage, etc.

Selon un mode de réalisation de l'invention, l'équipement numérique dispose d'un appareil photo et/ou d'une caméra C (certains dispositifs actuellement sur le marché permettent à la fois de prendre des photographies et des films vidéos, de sorte qu'il n'existe plus vraiment de séparation entre appareil photo et caméra vidéo). Cet appareil photographique, ou caméra, C peut être intégré au sein de l'équipement numérique T, ainsi que représenté sur la figure 1. Il peut également s'agir d'un dispositif indépendant, comme une webcam par exemple, qui peut être connecté physiquement ou par voie radio, avec l'équipement numérique.

Dans tous les cas, la caméra est fonctionnellement connectée à l'équipement numérique, c'est-à-dire que les données acquises par la caméra peuvent être transmises à l'équipement numérique et que ce dernier peut piloter la caméra afin de déclencher l'acquisition d'une photographie.

La figure 2 schématise un procédé d'accès sécurisé selon l'invention. Ce schéma est toutefois très largement adaptable et ne représente qu'un canevas sur lequel l'homme du métier peut déterminer des mises en oeuvre spécifiques, en fonction notamment du type de services dont l'accès est à sécuriser.

Une première phase 100 comporte l'identification de l'utilisateur de l'équipement numérique. Cette identification permet d'accéder à un ou plusieurs services fourni(s) par l'équipement numérique T

Cette étape d'identification peut être conforme aux solutions de l'état de la technique. Ainsi, une identification simple peut être requise pour l'utilisateur, consistant en la saisie d'un identifiant et/ou d'un mot de passe. Si l'équipement numérique est un ordinateur de bureau, l'utilisateur peut être invité à saisir un couple identifiant/mot de passe. Si l'équipement numérique T est un terminal de communication, l'identification peut consister en la saisie seule d'un mot de passe, par exemple sous la forme d'un code PIN (pour « *Personnal Identification Number* » en anglais).

Comme il a été décrit en introduction, le terme « service » doit être compris dans une acception large : ces services peuvent être des applications logicielles fonctionnant sur les équipements numériques eux-mêmes, ou des fonctionnalités offertes par le système d'exploitation de l'équipement.

L'accès peut donc ainsi concerner une partie des fonctionnalités d'un équipement, mais aussi l'ensemble de ces fonctionnalités. L'accès peut également concerner un service fourni à distance à travers un réseau de communication.

Différentes mises en oeuvre et variantes sont donc possibles pour cette étape d'identification.

Cette phase initiale comporte également, selon un mode de réalisation de l'invention, l'acquisition d'une première empreinte biométrique associée à l'utilisateur.

Selon un mode de réalisation de l'invention, cette empreinte biométrique est formée d'une photographie de l'utilisateur, capturée par la caméra C, fonctionnellement connectée à l'équipement numérique T.

Cette caméra peut être adaptée pour prendre une photographie du visage de l'utilisateur. Elle peut être prévue pour déclencher un éclairage ou un « flash » afin de permettre la capture une photographie de bonne qualité en cas de mauvaises conditions d'éclairage.

Cette photographie peut être ensuite stockée dans une mémoire. Cette mémoire peut être localisée dans l'équipement numérique T. Toute autre empreinte biométrique (échantillon de voix, capture d'empreinte digitale, etc.) peut de même être stockée dans une telle mémoire, y compris si elle est formée de plusieurs éléments.

Selon un mode de réalisation de l'invention, cette photographie (ou tout autre empreinte biométrique) peut être utilisé pour l'authentification de l'utilisateur. Il est en effet possible de mettre en place, à ce stade, un mécanisme d'authentification, consistant par exemple à comparer l'empreinte biométrique acquise lors cette phase d'identification avec un empreinte « témoin » qui a pu être stockée préalablement, lors d'une phase de configuration de l'accès sécurisé.

Une fois l'identification (et l'éventuelle authentification) effectuée, le procédé selon l'invention comprend l'accès proprement dit aux services protégés par cet accès sécurisé. Cette étape est représentée sous la référence 101 sur la figure 2. En parallèle, le procédé selon l'invention comprend une étape 102 de surveillance de la survenant d'un événement lié à l'utilisateur.

Différents types d'événements peuvent être pris en compte. Typiquement, ces événements sont liés au comportement de l'utilisateur de l'équipement numérique.

Un premier exemple est une inactivité de l'interface homme-machine pendant une période prédéterminée. Cette situation peut correspondre à l'éloignement de l'utilisateur de l'équipement numérique, de sorte qu'une autre personne pourrait l'utiliser et tirer profit de l'accès sécurisé préalablement accordé.

L'inactivité peut concerner l'ensemble des éléments de l'interface homme machine : clavier, dispositif de pointage, écran tactile

Un deuxième exemple est un mouvement brusque de l'équipement numérique. Un tel mouvement peut être détecté par un gyroscope ou autre détecteur de mouvement intégré dans certains équipements tels que les terminaux de type « smartphones ». Cette situation peut correspondre à un vol à l'arrachée d'un équipement portable, ou une action violente sur l'utilisateur de l'équipement numérique.

Un troisième exemple peut être la détection d'une anomalie dans le comportement individualisé de l'utilisateur de l'équipement numérique, c'est-à-dire une anomalie dans le comportement de l'utilisateur particulier qui utilise l'équipement (et non pas une anomalie par rapport à un comportement général des utilisateurs pris dans leur ensemble comme dans les deux premiers exemples).

Pour ce faire, une application fonctionnant en permanence sur l'équipement numérique peut construire progressivement un profil comportemental et détecter la divergence rapide d'un comportement détecté par rapport à ce profil. Ce comportement peut être construit en fonction des services accédés par l'utilisateur, une rapidité d'actions et de gestes, ainsi que d'une façon générale tout ce qui est lié à l'interaction de l'utilisateur à son équipement numérique.

Un autre exemple peut être lié à géolocalisation d'un équipement numérique : par exemple, si un équipement numérique détecte suivre un parcours ou entrer dans une zone géographique pour la première fois, cela peut être considéré comme un comportement individuel suspect, et donc à considérer comme un événement lié à l'utilisateur, au sens de l'invention.

Plusieurs mécanismes de détection peuvent être simultanément mis en place, de sorte qu'une acquisition d'une nouvelle empreinte biométrique peut être déclenchée lors de la détection du premier événement parmi ceux mis en surveillance.

Différents dispositifs techniques peuvent être utilisés pour réaliser un détecteur d'événement, afin de détecteur un changement d'état, par exemple par rapport au mouvement (gyroscope...), à la luminosité, au champ magnétique (magnétomètre)...

Lorsqu'un tel événement est détecté, une seconde phase 103 est déclenchée comportant l'acquisition d'une seconde empreinte biométrique.

Cette seconde empreinte biométrique doit être de même nature que la première empreinte biométrique, par exemple être une photographie si la première empreinte biométrique était une photographie.

Une comparaison entre deux empreintes biométriques est ensuite effectuée, et en fonction du résultat de cette comparaison, on déterminé si l'accès sécurisé est maintenu ou non.

Dans l'exemple illustré par la figure 2, cette comparaison est effectuée entre la seconde empreinte biométrique et la première empreinte biométrique acquise lors de la phase d'identification 100.

D'une façon générale, la comparaison peut être effectuée entre une seconde empreinte biométrique acquise en réponse à la détection d'un événement, et une première empreinte biométrique acquise préalablement à la détection de l'événement. En effet, plusieurs événements peuvent être détectés et il peut être opportun d'effectuer la comparaison avec une empreinte acquise le plus récemment possible.

La comparaison peut consister au calcul d'une mesure d'affinité entre les deux empreintes numériques. Il est donc important que les deux empreintes biométriques soient prises autant que possible dans les mêmes conditions ou que les algorithmes de calcul de la mesure d'affinité soient prévues pour être indépendants des conditions pouvant varier (éclairage, etc.)

Ainsi, deux photographies peuvent être comparées afin de déterminer si la personne en face de la caméra C après la détection d'un événement est bien l'utilisateur qui s'est initialement identifié.

Si tel n'est pas le cas, l'accès sécurisé n'est pas maintenu. Le service 101 est également interrompu.

Une nouvelle identification peut alors être requise au nouvel utilisateur (flèche en pointillé sur la figure 2, rebouclant sur la première phase 100).

Si la mesure d'affinité montre que la personne détectée est la même que l'utilisateur auquel l'accès sécurisé a été accordé, alors on peut revenir à l'étape 102 de surveillance et détection d'un nouvel événement. L'accès sécurisé est maintenu.

Les mécanismes de calcul de la mesure d'affinité peuvent être très variés et sont accessibles à l'homme du métier. Il est à noter qu'il s'agit de déterminer, par exemple, si deux photographies représentent le même visage, et que donc la discrimination n'est pas très complexe à mettre en oeuvre.

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'accès sécurisé pour un équipement numérique (T), comportant :
- Une première phase comportant l'identification d'un utilisateur dudit équipement numérique, afin d'accorder l'accès à au moins un service fourni par ledit équipement numérique, et l'acquisition d'une première empreinte biométrique associée audit utilisateur ; et,
- Une deuxième phase déclenchée lors de la détection d'un événement lié audit utilisateur par ledit équipement numérique et comprenant l'acquisition d'une empreinte biométrique et la détermination du maintien ou non dudit accès en fonction d'une comparaison de ladite seconde empreinte biométrique avec une première empreinte biométrique acquise préalablement à ladite détection d'un événement.

2. Procédé selon la revendication précédente, dans lequel lesdites empreintes biométriques sont des photographies, capturées par une caméra fonctionnellement connectée audit équipement numérique.

3. Procédé selon l'une des revendications précédentes, dans lequel ledit événement est représentatif d'une anomalie de comportement individuel dudit utilisateur.

4. Procédé selon l'une des revendications précédentes, dans lequel la première phase comprend l'authentification dudit utilisateur sur la base de ladite première empreinte.

5. Procédé selon l'une des revendications précédentes, dans lequel ledit équipement numérique est un terminal de communication connecté à un réseau de communication et ledit accès est un accès à un service disponible à travers ledit réseau de communication.

6. Programme d'ordinateur comportant du code exécutable par un équipement numérique pour mettre en oeuvre le procédé selon l'une des revendications précédentes.

7. Equipement numérique (T) comportant une interface homme-machine (V, C) permettant l'identification d'un utilisateur dudit équipement afin d'accorder l'accès à au moins un service fourni par ledit équipement, et l'acquisition d'une première empreinte biométrique associée audit utilisateur ; et des moyens pour détecter un événement lié audit utilisateur et déclencher alors l'acquisition par ladite interface homme-machine d'une seconde empreinte biométrique et la détermination du maintien ou non dudit accès en fonction d'une comparaison de ladite empreinte biométrique avec une première empreinte biométrique acquise préalablement à la détection dudit événement.

8. Equipement numérique selon la revendication précédente, dans lequel ladite interface homme-machine comporte une caméra (C) pour capturer une première et une seconde photographies, constituant lesdites empreintes biométriques.

9. Equipement numérique selon l'une des revendications 7 ou 8, comportant un détecteur de mouvements prévus pour déterminer ledit événement.

10. Equipement numérique selon l'une des revendications 7 à 9, comportant en outre une application prévue pour détecter l'inactivité de ladite interface homme-machine pendant une période prédéterminée.

## Revendications modifiées

### Revendications modifiées conformément à la règle 137(2) CBE.

1. Procédé d'accès sécurisé pour un équipement numérique (T), comportant :
- Une première phase comportant l'identification d'un utilisateur dudit équipement numérique, afin d'accorder l'accès à au moins un service fourni par ledit équipement numérique, et l'acquisition d'une première empreinte biométrique associée audit utilisateur ; et,
- Une deuxième phase déclenchée lors de la détection d'un événement représentatif d'une anomalie de comportement individuel dudit utilisateur par ledit équipement numérique et comprenant l'acquisition d'une seconde empreinte biométrique et la détermination du maintien ou non dudit accès en fonction d'une comparaison de ladite seconde empreinte biométrique avec une première empreinte biométrique acquise préalablement à ladite détection d'un événement.

2. Procédé selon la revendication précédente, dans lequel lesdites empreintes biométriques sont des photographies, capturées par une caméra fonctionnellement connectée audit équipement numérique.

3. Procédé selon l'une des revendications précédentes, dans lequel la première phase comprend l'authentification dudit utilisateur sur la base de ladite première empreinte.

4. Procédé selon l'une des revendications précédentes, dans lequel ledit équipement numérique est un terminal de communication connecté à un réseau de communication et ledit accès est un accès à un service disponible à travers ledit réseau de communication.

5. Programme d'ordinateur comportant du code exécutable par un équipement numérique pour mettre en oeuvre le procédé selon l'une des revendications précédentes.

6. Equipement numérique (T) comportant une interface homme-machine (V, C) permettant l'identification d'un utilisateur dudit équipement afin d'accorder l'accès à au moins un service fourni par ledit équipement, et l'acquisition d'une première empreinte biométrique associée audit utilisateur ; et des moyens pour détecter un événement représentatif d'une anomalie de comportement individuel dudit utilisateur et déclencher alors l'acquisition par ladite interface homme-machine d'une seconde empreinte biométrique et la détermination du maintien ou non dudit accès en fonction d'une comparaison de ladite empreinte biométrique avec une première empreinte biométrique acquise préalablement à la détection dudit événement.

7. Equipement numérique selon la revendication précédente, dans lequel ladite interface homme-machine comporte une caméra (C) pour capturer une première et une seconde photographies, constituant lesdites empreintes biométriques.

8. Equipement numérique selon l'une des revendications 6 ou 7, comportant un détecteur de mouvements prévus pour déterminer ledit événement.

9. Equipement numérique selon l'une des revendications 6 à 8, comportant en outre une application prévue pour détecter l'inactivité de ladite interface homme-machine pendant une période prédéterminée.
